# FASCICULE DE BREVET EUROPEEN

(11) **EP 1 036 295 B1**
(45) Date de publication et mention de la délivrance du brevet: **06.02.2002**
(21) Numéro de dépôt: 98956969.4
(22) Date de dépôt: 27.11.1998
(51) Int. Cl.: F28D 9/00

(54) **ECHANGEUR DE CHALEUR METALLIQUE EMAILLE ET SENSIBLEMENT PLAT**
METALLISCHER, EMAILLIERTER UND IM WESENTLICHEN FLACHER WÄRMETAUSCHER
SUBSTANTIALLY FLAT ENAMELLED METAL HEAT EXCHANGER

(30) Priorité: 02.12.1997 FR 9715355
(43) Date de publication de la demande: 20.09.2000
(73) Titulaire: De Dietrich & Cie, 67110 Niederbronn-les-Bains (FR); Icoss S.r.l., 20098 San Giuliano Milanese (IT)
(72) Inventeur: HAMERT, Jean-Marie, F-67800 Hoenheim (FR); CASTIGLIONI, Antonio, I-20100 Milano (IT)
(74) Mandataire: Metz, Paul
(86) Numéro de dépôt international: FR9802550
(87) Numéro de publication internationale: WO9928691

(56) Documents cités:
- WO-A-79/00068
- WO-A-91/11252
- FR-A- 2 173 424
- FR-A- 2 392 349

## Description

L'invention concerne un échangeur de chaleur métallique émaillé et plat du type poche pouvant servir dans les domaines les plus variés, mais notamment dans les milieux chimiquement agressifs tels qu'on les trouve dans les industries chimiques et pharmaceutiques.

Les échangeurs émaillés à plaques se composent d'une série de plaques superposées délimitant à chaque fois un espace plat le long duquel on fait passer alternativement d'un espace à l'autre deux fluides à des températures différentes selon des flux croisés.

Il s'agit de réalisations telles que celles décrites dans le brevet EP n°0566208 au nom de ABB LUMMUS HEAT TRANSFER BV et EP n°0522360 au nom de ROTHEMUHLE BRANDT KRITZLER.

Dans le premier brevet, il s'agit d'un bloc constitué par l'empilement de plaques émaillées maintenues à distance les unes des autres par des entretoises conformées par exemple dans les éléments formant arête. Les plaques sont d'abord émaillées puis soudées entre elles par leurs bords ou étanchées par joint périmétrique,

Dans le second brevet, il s'agit d'un empilement de plaques ou de feuilles de tôle alternativement planes et ondulées. La forme d'onde des tôles ondulées permet de délimiter entre deux tôles successives des canaux plats adjacents de passage de fluides à températures différentes.

Ces échangeurs sont surtout destinés à l'échange thermique entre deux fluides gazeux. L'émaillage leur confère une résistance accrue à la corrosion pour résister à l'agressivité des condensats.

Dans ces échangeurs, les condensats ne présentent ni une masse volumique importante ni un haut degré d'agressivité et de ce fait on ne recherche pas la haute protection nécessaire dans le cas des échangeurs soumis aux milieux agressifs que l'on rencontre dans les industries chimiques et pharmaceutiques.

En ce qui concerne les secteurs de la chimie et de la pharmacie, les échangeurs actuels soumis à agressions chimiques sont à faisceau(x) de tubes émaillés. Des échangeurs chimiques de ce type ont été décrits notamment dans les brevets FR n°2392349 au nom de PFAUDLER et EP n°0203288 au nom de TYCON Spa. Les tubes émaillés sont soit soudés soit montés frettés sur des plaques terminales. Ils sont également montés sur ces plaques avec interposition d'un joint d'étanchéité. Les tubes sont émaillés avant le montage ou émaillés ensemble après soudure sur les plaques terminales. Dans le premier cas, on pratique une étanchéité avec joint qui nécessite un joint par tube entraînant un risque de défaut d'étanchéité augmentant avec le nombre de joints.

Dans le deuxième cas, l'émaillage ultérieur des tubes soudés représente une grande difficulté d'exécution en raison du grand nombre de tubes à émailler simultanément.

Par ailleurs, les échangeurs à éléments plats renfermant un fluide s'avèrent particulièrement intéressants en raison de leur grande surface d'échange pour une seule entrée et une seule sortie.

De plus, leur conformation en poche mince permet un échange particulièrement efficace et rapide.

Les éléments plats servant d'échangeurs sont réalisés principalement en tôle à la manière d'un radiateur plat. Les tôles sont déformées pour leur conférer une forme en demi-coquille plate. Les deux demi-coquilles sont solidarisées par réunion de leur bord périphérique généralement par soudage électrique et comportent de ce fait un bourrelet longitudinal mince.

Tous ces échangeurs présentent l'inconvénient de comporter des zones de solidarisation et d'assemblage qu'il faut également émailler. Il s'agit par exemple des jonctions des bords des plaques avec la structure porteuse pour les premiers et les raccordements d'étanchéité entre les extrémités des tubes et les brides pour les autres.

Or, l'émaillage de ces zones est problématique dans sa réalisation en raison des reliefs et de la qualité mécanique des surfaces. Par ailleurs, les échangeurs plats présentent de multiples soudures sur leurs faces latérales destinées à solidariser ponctuellement les deux plaques entre elles. Cet état de relief et de surface n'est pas favorable à la constitution d'une couche d'émail régulière. Au contraire le risque de défaut et de discontinuités dans la couche d'émail est important, ce qui représente une cause d'apparition de points faibles dans la couche d'émail rapidement attaqués par le milieu corrosif conduisant à des défauts ponctuels d'étanchéité. Ces difficultés obligent les opérateurs à prendre de nombreuses précautions et à pratiquer des recherches constantes de défauts ponctuels de toute nature.

De plus, les échangeurs plats de plus grandes dimensions présentent des soudures multiples sur leurs faces latérales destinées à garantir un espacement constant entre les deux tôles et une rigidité mécanique d'ensemble.

L'émaillage de ces zones requiert un savoir faire et un soin importants et ainsi, le risque d'une couche d'émail défectueuse à cet endroit est élevé dans le cadre d'une production en série. Le soin dans le travail et la dextérité nécessaires ne se trouvant que chez certains ouvriers soigneusement sélectionnés, on comprendra que les opérations d'émaillage renchérissent considérablement le coût du produit.

L'invention a pour but d'émailler des échangeurs plats métalliques en vue de les rendre résistants aux produits chimiques et par conséquent leur ouvrir un champ d'applications très vaste dans l'industrie notamment dans les secteurs de la chimie et de la pharmacie.

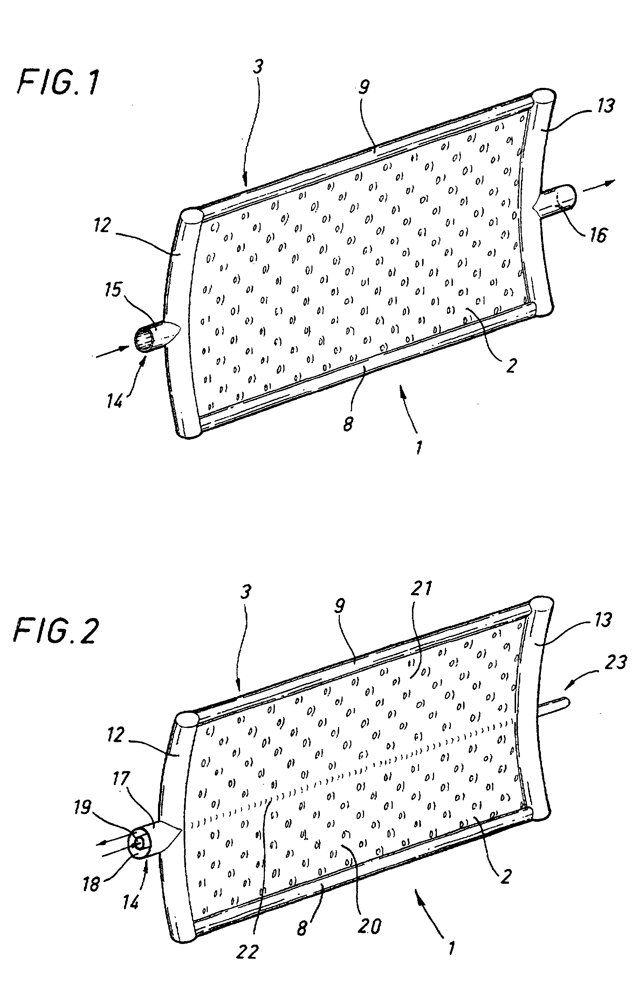

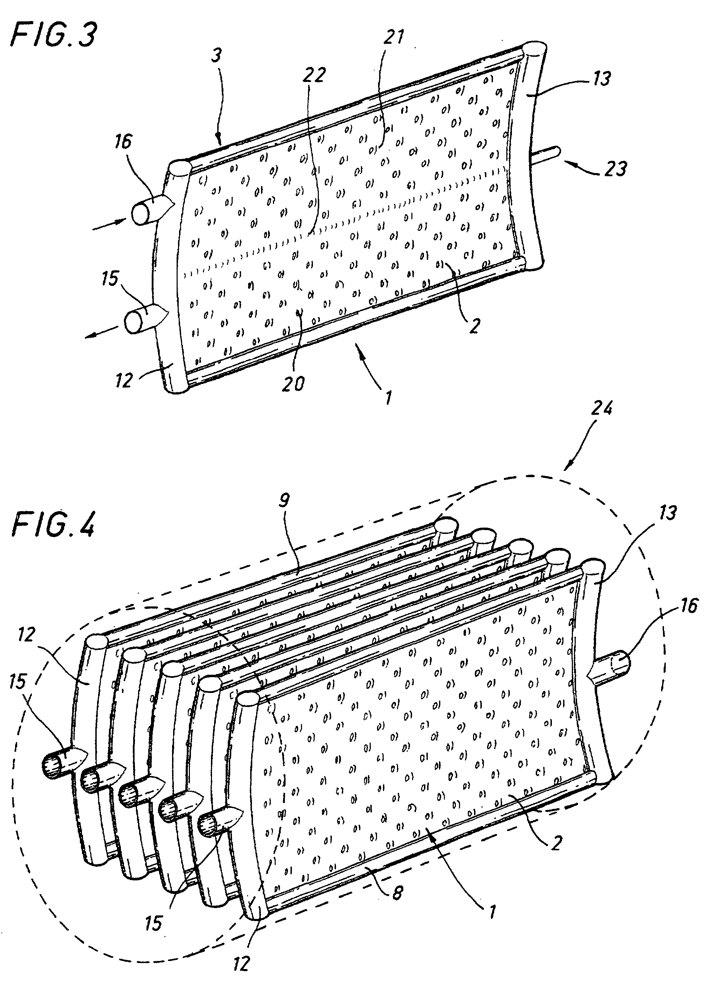

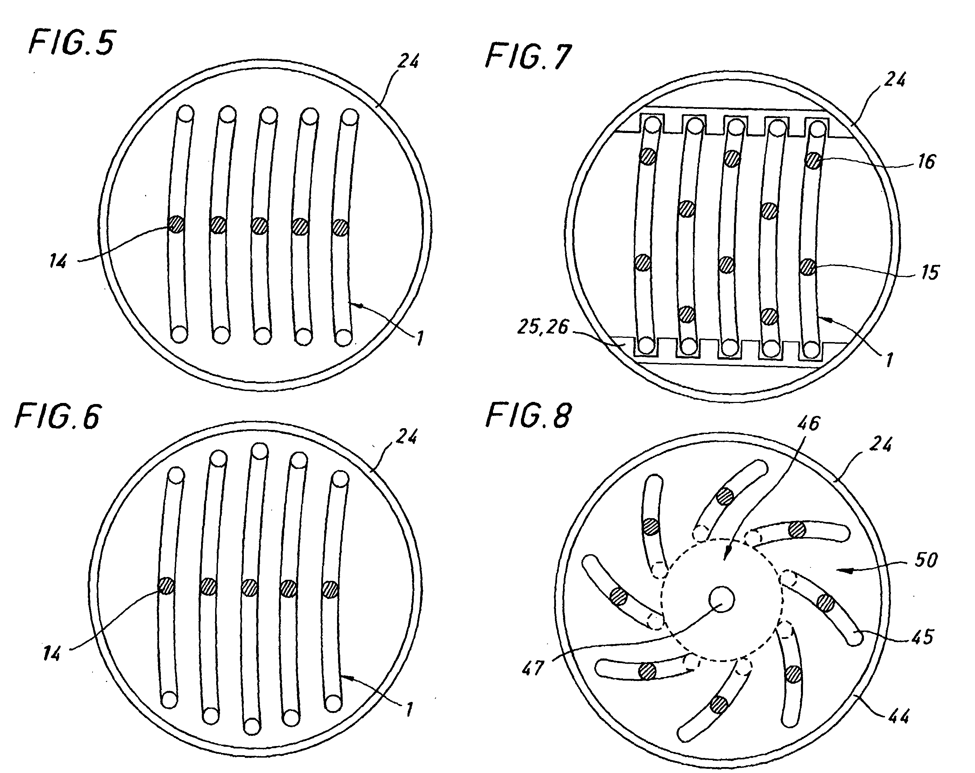

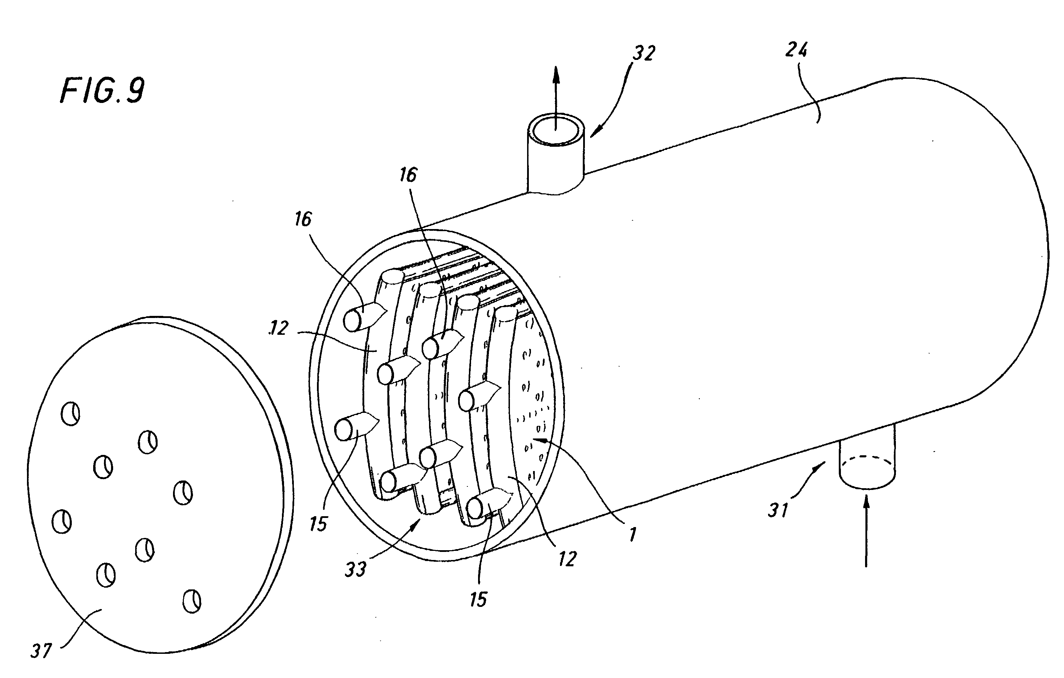

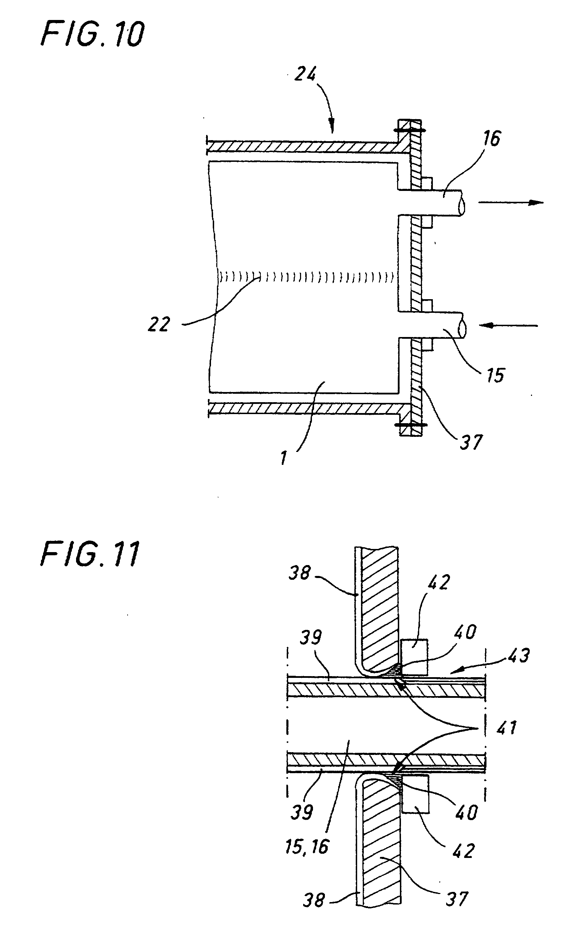

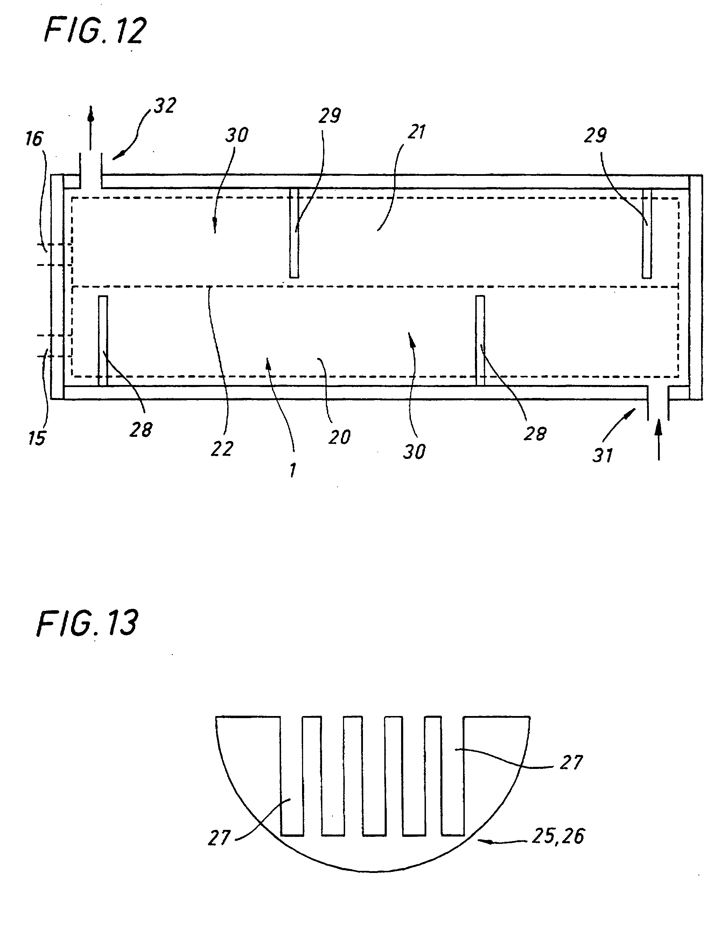

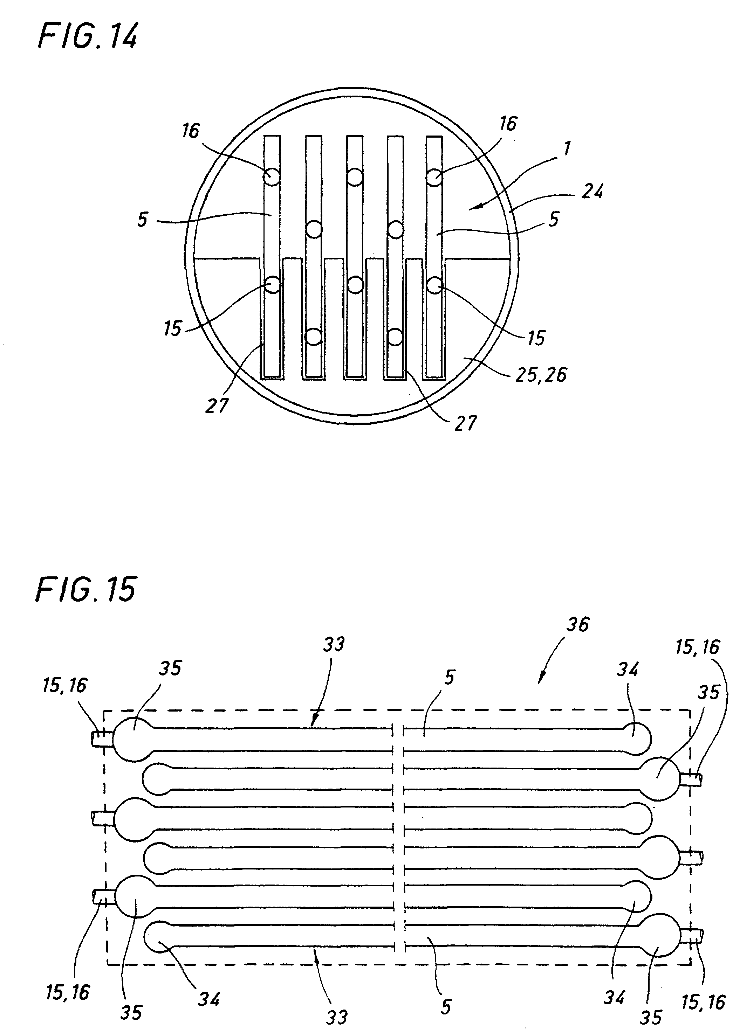

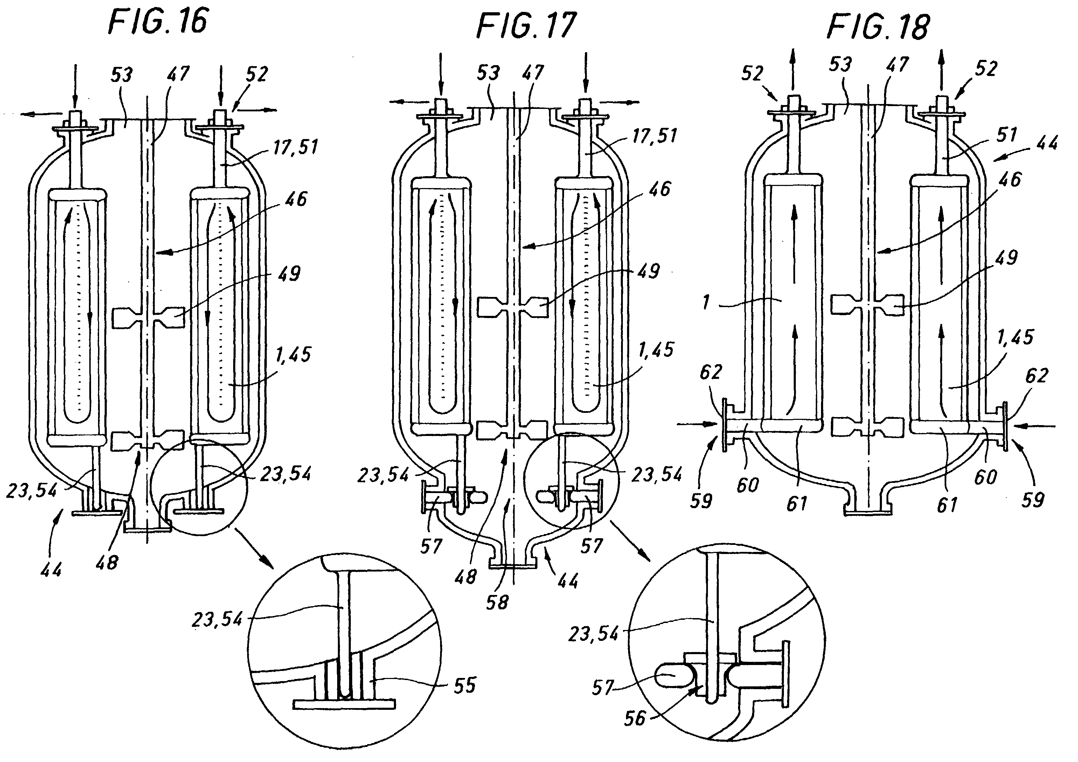

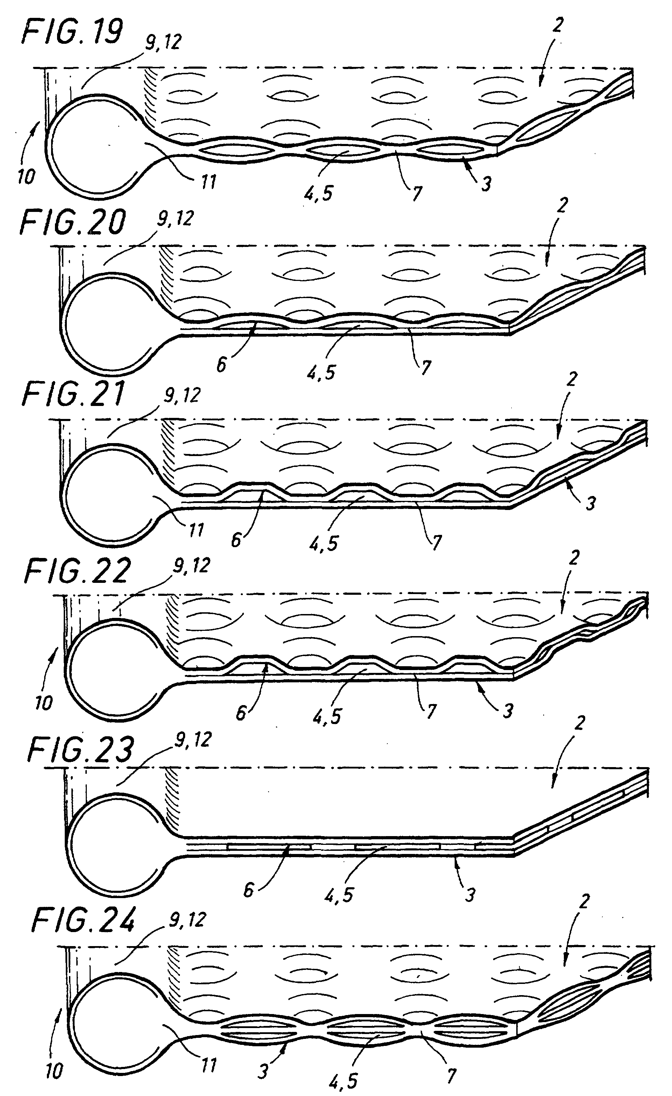

D'autres caractéristiques et avantages de l'invention apparaîtront dans la description qui suit, donnée à titre d'exemple et accompagnée des dessins qui représentent :
. les figures 1, 2 et 3 : des vues en perspective de trois variantes d'échangeurs unitaires émaillés selon l'invention respectivement :
   . à un seul compartiment avec raccordement d'entrée sortie à chacune des extrémités,
   . à deux compartiments parallèles avec sortie commune à chacune des extrémités,
   . à deux compartiments parallèles avec sorties individuelles distinctes du même côté ;
. la figure 4 : une vue schématique en perspective d'un groupement parallèle de plusieurs échangeurs unitaires incorporés dans une enveloppe tubulaire formant un échangeur tubulaire à large surface d'échange ;
. les figures 5 et 6 : des vues schématiques en coupe transversale de deux dispositions possibles d'un échangeur tubulaire occupé par des échangeurs plats unitaires en disposition parallèle de largeur identique ou de largeur grandissante des extrémités vers la centre ;
. la figure 7 : une vue schématique en coupe transversale illustrant un exemple de maintien des corps des échangeurs élémentaires émaillés ;
. la figure 8 : une vue en plan montrant une disposition du type en étoile à l'intérieur d'une cuve cylindrique verticale par exemple à usage de réacteur chimique ;
. la figure 9 : une vue schématique en perspective d'un échangeur à corps tubulaire contenant des échangeurs plats selon l'invention et montrant l'extrémité des raccordements hydrauliques ;
. la figure 10 : une vue en coupe longitudinale de l'extrémité des raccordements hydrauliques ;
. la figure 11 : une vue agrandie en coupe d'un passage à travers la plaque de fermeture de l'extrémité des raccordements hydrauliques ;
. la figure 12 : une vue schématique en coupe d'un échangeur à corps tubulaire avec chicanes renfermant une pluralité d'échangeurs plats et de section plane selon l'invention maintenus par lesdites chicanes ;
. les figures 13 et 14 : des vues en élévation d'un exemple de chicane respectivement sans et avec les échangeurs ;
. la figure 15 : une vue en plan d'une disposition imbriquée d'échangeurs plans dissymétriques à chants latéraux d'extrémité de section différente pour chaque échangeur ;
. les figures 16 à 18 : des vues schématiques en coupe verticale avec agrandissement sur extrémité inférieure de maintien pour les deux premières montrant l'utilisation des échangeurs unitaires dans une cuve cylindrique verticale par exemple à usage de réacteur chimique ;
. les figures 19 à 24 : des vues successives mixtes en coupe avec une prolongation de perspective de différentes formes d'échangeurs unitaires plats utilisables dans le cadre de la présente invention.

Les figures 1, 2 et 3 représentent des échangeurs unitaires légèrement incurvés du type de ceux visés par l'invention.

Ces échangeurs sont métalliques et présentent toutes les caractéristiques techniques de forme, de résistance et de matière pour permettre la réalisation d'un bon émaillage avec une garantie suffisante de tenue de l'étanchéité dans le temps, même en ambiance chimiquement agressive.

On examinera dans un premier temps les échangeurs unitaires avant de passer à leur groupement dans le cadre d'applications ou d'utilisations particulières.

Chaque échangeur présente un corps métallique 1 sensiblement plat, de section transversale légèrement incurvée ou plane et à surface latérale formée de deux feuilles de tôle l'une avant 2 et l'autre arrière 3 espacées par exemple par des entretoises ou des conformations intérieures 4 réalisées par exemple par gaufrage de la tôle délimitant un espace intérieur 5 entièrement ouvert ou des compartiments ou des canaux intérieurs 6 entre une ou plusieurs divisions intérieures (figures 19 à 24).

Selon une forme de réalisation préférentielle, les parois délimitant le volume intérieur 5 sont réunies ponctuellement entre elles par des points ou des zones de soudure 7 par exemple électrique ou par laser ou toute autre forme de solidarisation comme représenté sur les figures 19 à 24.

Ces formes de réalisation permettent d'obtenir de bonnes caractéristiques mécaniques pour les échangeurs. Les points ou zones de soudure 7 doivent faire l'objet d'une préparation et d'une attention particulières lors de l'émaillage afin de garantir la continuité de la couche d'émail et ainsi la tenue de l'étanchéité.

Les chants longitudinaux 8 et 9 sont conformés selon une forme de section en bourrelet ou habillés par des renforcements à profil arrondi, par exemple des tronçons tubulaires 10 coiffant ces chants et engagés puis immobilisés sur ceux-ci, comme représenté sur les figures ou même remplaçant ces chants ou toute autre façon d'obtenir ces chants arrondis ou bombés. Dans une réalisation préférée, on ouvre longitudinalement un tube 10 selon une fente et on enfile ce tube sur le chant ouvert 11 par sa fente puis on le solidarise à celui-ci.

Bien entendu, des formes cylindriques semi circulaires légèrement aplaties sur les flancs ou toute autre forme approchante conviennent également.

Les chants transversaux 12 et 13 sont recouverts de la même façon par un habillage tubulaire cintré ou plan de section arrondie de manière à réaliser une forme en bourrelet facilement émaillable, par exemple de section plus importante que celle des chants longitudinaux.

On a intérêt à. ce que la transition entre les formes arrondies et la face plane adjacente soit la plus progressive possible pour éviter des zones étroites en forme de rainures ou en canaux plus difficilement émaillables.

Les chants transversaux comportent au niveau de leur partie médiane dans le prolongement de la surface de l'échangeur une naissance ou un moignon tubulaire 14 servant d'entrée et/ou de sortie, sur lequel ou lesquels sont solidarisés ou raccordés les tubes ou conduites d'amenée et/ou de sortie du liquide traversant l'échangeur. I1 s'agit soit de deux tronçons distincts 15 et 16 disposés à chaque extrémité de l'échangeur ou à distance l'un de l'autre sur la même extrémité transversale (figures 1 et 3), soit d'un seul tronçon coaxial 17 acceptant deux conduits concentriques l'un 18 pour l'entrée et l'autre 19 pour la sortie (figure 2). Dans les deux cas des figures 2 et 3, le volume intérieur est partagé en deux compartiments longitudinaux 20 et 21 par un cloisonnement longitudinal médian 22 intérieur et ouvert en extrémité et il existe pour ces variantes à l'extrémité fermée une patte médiane longitudinale d'immobilisation 23.

Les surfaces et formes ainsi créées ne présentent aucun chant ou rebord linéaire mince en creux ou en relief. Elles ne comportent ni saillies ni creux ponctuels ni même une quelconque forme technique en relief ou en creux de petite dimension et de faible rayon de courbure représentant des volumes réduits et de forme complexe difficiles à émailler.

Cette conformation régulière en formes arrondies et sans reliefs prononcés permet d'effectuer plus facilement un émaillage uniforme, dans les meilleures conditions et de garantir son maintien dans le temps.

Un effet supplémentaire de résistance mécanique ou de meilleure transmission de la chaleur peut être obtenu par un émail de composition spéciale.

On peut associer ou assembler les échangeurs en différents groupes dans lesquels ils sont disposés parallèles les uns aux autres. On peut ainsi les loger à l'intérieur d'un volume quelconque.

Une application intéressante est représentée sur les figures 4 à 15 montrant les échangeurs en disposition parallèle logés dans un volume tubulaire émaillé délimité par une enveloppe tubulaire cylindrique 24 le long de laquelle se propage le fluide d'échange, par exemple un fluide corrosif qu'il faut réchauffer ou refroidir par un fluide caloporteur circulant dans les échangeurs.

L'ensemble formé par les échangeurs 1 en disposition parallèle peut être posé sur des supports transversaux 25 de maintien, conformés en berceau réalisés en téflon portant, our conformé en, un râtelier 26 à fentes de réception 27 formant des logements parallèles comme représenté sur les figures 7, et 12 à 14. Il existe de préférence au moins deux râteliers l'un inférieur 28, l'autre supérieur 29 destinés à maintenir les échangeurs unitaires parallèles entre eux à l'intérieur du volume tubulaire 24. Ce couple de deux supports en râteliers 28 et 29 peut être répété à distance.

Une variante intéressante de réalisation est représentée sur les figures de 12 à 14.

Il s'agit d'un échangeur à corps tubulaire 24 dont le volume intérieur renferme des chicanes 30 formées des supports transversaux en râteliers 28 et 29 par exemple de hauteur voisine du rayon du corps tubulaire 24. Ces supports transversaux 28 et 29 sont disposés en plusieurs endroits de manière à constituer plusieurs chicanes 30 sur toute la longueur de l'échangeur entre l'entrée 31 et la sortie 32 du fluide corrosif (figure 12).

De façon avantageuse, les supports transversaux 28 et 29 formant les éléments des chicanes 30 remplissent une deuxième fonction. Ils présentent comme ci-dessus les fentes parallèles de réception 27 destinées à soutenir et à maintenir les échangeurs plans 1 que renferme le corps tubulaire 24.

Dans cette variante, les échangeurs sont souhaités plans bien que des réalisations à faible courbure sont également possibles.

En vue d'améliorer le coefficient de remplissage volumique du corps tubulaire 24 qui est proportionnel aux performances de l'échangeur, on prévoit d'utiliser des échangeurs plans dissymétriques 33 par exemple ceux représentés sur la figure 15. Ces échangeurs présentent un ensemble entrée/sortie sur la même extrémité. Le corps de ces échangeurs diffère des autres réalisations en ce que les chants transversaux des deux extrémités ne sont pas identiques. Le chant transversal arrondi 34 de l'extrémité fermée c'est-à-dire non passante est de plus faible section que celui du chant arrondi 35 de l'extrémité opposée comportant les tronçons d'entrée et/ou de sortie. Cette caractéristique de conformation permet de former des groupements compacts 36 par décalage alternatif de deux échangeurs adjacents et d'arriver ainsi par un rapprochement dimensionnel minimal entre deux échangeurs successifs à une meilleure compacité. Il s'en suivra des performances améliorées pour l'échangeur à corps tubulaire 24.

Un exemple de traversée de la paroi d'extrémité 37 de l'échangeur à corps tubulaire 24 est représenté sur les figures 10 et 11.

Cette traversée s'effectue par exemple par contact direct de la couche intérieure 38 d'émail du corps tubulaire 24 contre la couche extérieure 39 protégeant les tronçons d'entrée et de sortie. Une matière d'étanchéité 40 est pressée dans un logement conique 41 par une pièce de pression par exemple un écrou 42 monté sur l'extrémité filetée 43.

Une autre application concerne l'utilisation d'au moins un échangeur émaillé dans la cuve d'un mélangeur ou d'un réacteur 44 et notamment dans une cuve ou un réservoir où se produit une réaction chimique que l'on veut contrôler. L'échangeur permet d'absorber puis d'évacuer les calories excédentaires ou bien d'apporter les calories nécessaires au démarrage de la réaction et d'évacuer les calories excédentaires quand la réaction se produit.

La forme de réalisation préférée comprendra une pluralité d'échangeurs 45 à section incurvée disposés autour d'un agitateur central 46 dont l'arbre 47 porte un ou plusieurs rotors 48 muni(s) de pales 49 comme représenté sur les figures de 16 à 18. Cet échangeur complexe 50 est constitué d'un ensemble d'échangeurs élémentaires incurvés tels que ceux décrits ci-dessus en présentation verticale et en disposition radiale à l'intérieur du volume cylindrique de la cuve. Cet ensemble est de préférence statique et apparaît vu de dessus comme un rotor de turbine, les échangeurs 45 légèrement cintrés en constituant les pales.

Ces échangeurs 45 sont montés à l'intérieur de la cuve constituant un réservoir ou un réacteur chimique selon différentes techniques comme le montrent les figures 16 à 18.

Il s'agit d'abord des échangeurs à entrée/sortie sous la forme du tronçon tubulaire coaxial 17 se poursuivant vers le haut par une prolongation 51 traversant la cuve du réacteur 44 dans sa partie supérieure par des passages 52 de tubes disposés autour de l'ouverture centrale supérieure 53 (figures 16 et 17). Les échangeurs sont immobilisés mécaniquement par leur prolongation inférieure 23 de manière à ce que leur corps reste bien parallèle à l'axe longitudinal de la cuve et surtout à permettre leur dilatation et à compenser les efforts dus à l'agitation. Cette fixation est réalisée par exemple sous la forme d'une prolongation d'immobilisation 54 dont l'extrémité vient se loger dans un plot récepteur de centrage 55 réalisé par exemple en matière plastique synthétique chimiquement résistante (figure 16). Le plot de centrage 55 peut être réalisé sous la forme d'un bouchon 56 traversant ou non recevant l'extrémité de la prolongation d'immobilisation 54 comme représenté sur les vues de détail. Selon la variante représentée sur la figure 17, ces pièces en bouchon 56 sont réalisées en matière synthétique chimiquement résistante et encastrées dans les ouvertures d'une couronne 57 transversale à la cuve délimitant une ouverture centrale 58. Bien entendu, diverses autres formes de réalisation sont possibles.

Encore un autre mode de réalisation consiste à prévoir pour chaque échangeur une entrée inférieure 59 par un conduit transversal d'extrémité 60 formant en même temps le maintien d'immobilisation mécanique inférieure comme représenté sur la figure 18. On remarque sur cette figure que l'entrée s'effectue par une pièce de renforcement 61 du chant transversal inférieur de l'échangeur et que celle-ci débouche sur une bride latérale inférieure 62 servant d'interface avec le réseau de circulation du fluide réfrigérant traversant chaque échangeur.

Les échangeurs peuvent affecter différentes formes de section transversale telles que par exemple celles représentées sur les figures 19 à 24. Sur ces figures on remarque un volume intérieur 5 délimité par les deux tôles 2 et 3 réunies ponctuellement par des zones locales de jonction-soudure 7. On remarque également que le chant transversal 12 et le chant longitudinal 9 affectent une forme tubulaire arrondie facilement émaillable.

## Revendications

1. Echangeur métallique de chaleur du type plat formé de deux feuilles de tôle (2) et (3) réunies entre elles de façon étanche par les bords de leurs chants longitudinaux (8) et (9) et transversaux (12) et (13) délimitant un volume intérieur (5), libre ou cloisonné, débouchant à l'extérieur sur au moins un chant transversal (12) ou (13) par au moins une communication fluidique coaxiale ou simple, **caractérisé en ce que** les chants longitudinaux (8) et (9) et transversaux (12) et (13) sont de forme arrondie, **en ce que** le profil de section transversale de l'échangeur présente une forme plane ou légèrement cintrée et **en ce que** le corps extérieur de l'échangeur est entièrement émaillé.

2. Echangeur selon la revendication 1, **caractérisé en ce que** les feuilles de tôle (2) et (3) sont soudées entre elles par points ou par zones (7) avant émaillage.

3. Echangeur selon la revendication 1, **caractérisé en ce que** les feuilles de tôle (2) et (3) sont séparées par une cloison intérieure (23) parallèle aux bords longitudinaux de l'échangeur qui partage le volume intérieur (5) en deux compartiments juxtaposés (21) et (22).

4. Echangeur selon les revendications 1, 2 ou 3, **caractérisé en ce que** son volume intérieur (5) est cloisonné par des parois perpendiculaires aux faces de manière à former des compartiments intérieurs.

5. Echangeur selon les revendications 1, 2 ou 3, **caractérisé en ce que** son volume intérieur (5) est partagé en deux compartiments longitudinaux indépendants disposés côte-à-côte par une cloison longitudinale médiane.

6. Echangeur selon l'une quelconque des revendications précédentes **caractérisé en ce que** les chants périmétriques arrondis (8,9) et (12,13) sont habillés par des renforcements à profil arrondi.

7. Echangeur selon la revendication précédente **caractérisé en ce que** les chants périmétriques arrondis (8,9) et (12,13) sont formés en rapportant sur chacun de ceux-ci un tronçon (10) de tube ouvert par une fente longitudinale et enfilé le long du chant par cette fente.

8. Echangeur selon l'une quelconque des revendications précédentes **caractérisé en ce que** chaque chant transversal (12) et (13) présente un tronçon (14) tubulaire de sortie.

9. Echangeur selon l'une quelconque des revendications précédentes de 1 à 7 **caractérisé en ce qu'**un même chant transversal (12) ou (13) présente un ensemble transversal d'entrée/sortie.

10. Echangeur selon l'une quelconque des revendications précédentes de 1 à 7 **caractérisé en ce que** les tronçons d'entrée/sortie sont distincts (15) et (16).

11. Echangeur selon l'une quelconque des revendications précédentes de 1 à 7 **caractérisé en ce que** l'ensemble d'entrée/sortie est un tronçon coaxial (17).

12. Groupement parallèle d'échangeurs selon l'une quelconque des revendications précédentes, **caractérisé en ce qu'**ils sont disposés parallèles entre eux, l'un à côté de l'autre et maintenus en place et à distance l'un de l'autre par des supports transversaux (25), et **en ce qu'**ils sont disposés à l'intérieur d'une enveloppe tubulaire (24) à volume intérieur entièrement émaillé pour former un échangeur compact.

13. Groupement selon la revendication 12, **caractérisé en ce que** les supports transversaux (25) de maintien sont des supports transversaux (25) du type râtelier comportant une pluralité de fentes parallèles de réception (27) servant chacun de logement à une partie du corps de chaque échangeur.

14. Groupement selon la revendication précédente **caractérisé en ce que** les supports transversaux (25) du type râtelier jouent le rôle de chicane (30).

15. Groupement selon l'une des revendications précédentes 13 ou 14 **caractérisé en ce que** les échangeurs sont dissymétriques (33) à chants transversaux différents l'un de l'autre formant en juxtaposition décalée l'un par rapport à l'autre un échangeur compact (36).

16. Groupement selon la revendication précédente **caractérisé en ce que** le bord arrondi de l'un des chants transversaux (12) ou (13) est de section plus importante que l'autre.

17. Groupement d'échangeurs selon l'une quelconque des revendications de 1 à 11 **caractérisé en ce que** les échangeurs (45) sont disposés debout approximativement radialement autour de l'arbre (47) de l'agitateur central (46) de la cuve d'un réacteur chimique (44).

18. Groupement selon la revendication précédente **caractérisé en ce que** chaque échangeur (45) présente une prolongation inférieure (54) venant se loger dans un plot récepteur (55).

19. Groupement selon la revendication précédente **caractérisé en ce que** chaque plot récepteur (55) est prévu dans la paroi de fond de la cuve.

20. Groupement selon la revendication 18 **caractérisé en ce que** chaque plot récepteur (55) est prévu dans une couronne transversale (57) montée près du fond de la cuve.

## Patentansprüche

1. Metallischer Wärmetauscher flacher Bauart, welcher aus zwei Blechtafeln (2, 3) gebildet ist, die an den Rändern ihrer Längskanten (8, 9) und Querkanten (12, 13) dicht miteinander verbunden sind und einen Innenraum (5) begrenzen, der an wenigstens einer Querkante (12, 13) über wenigstens eine koaxiale oder einfache Fluidverbindung nach außen mündet, **dadurch gekennzeichnet, daß** die Längskanten (8, 9) und die Querkanten (12, 13) abgerundet ausgebildet sind, daß das Querschnittsprofil des Wärmetauschers eine ebene oder geringfügig gewölbte Form aufweist, und daß der äußere Körper des Wärmetauschers vollständig emailliert ist.

2. Wärmetauscher nach Anspruch 1, **dadurch gekennzeichnet, daß** die Blechtafeln (2, 3) vor der Emaillierung punkt-verschweißt oder bereichsweise (7) verschweißt sind.

3. Wärmetauscher nach Anspruch 1, **dadurch gekennzeichnet, daß** die Blechtafeln (2, 3) durch eine zu den Längsrändern des Wärmetauschers parallele, innere Trennwand (23) getrennt sind, welche den Innenraum (5) in zwei nebeneinander angeordnete Kammern (20, 21) unterteilt.

4. Wärmetauscher nach einem der Ansprüche 1, 2 oder 3, **dadurch gekennzeichnet, daß** sein Innenraum (5) durch senkrecht zu den Seiten angeordnete Wandungen unter Bildung innerer Kammern unterteilt ist.

5. Wärmetauscher nach einem der Ansprüche 1, 2 oder 3, **dadurch gekennzeichnet, daß** sein Innenraum (5) durch eine mittlere Längswandung in zwei unabhängige, nebeneinander und längs angeordnete Kammern unterteilt ist.

6. Wärmetauscher nach einem der vorangehenden Ansprüche, **dadurch gekennzeichnet, daß** die abgerundeten Umfangskanten (8, 9; 12, 13) durch Verstärkungen mit abgerundetem Profil verkleidet sind.

7. Wärmetauscher nach dem vorangehenden Anspruch, **dadurch gekennzeichnet, daß** die abgerundeten Umfangskanten (8, 9; 12, 13) durch Anfügen jeweils eines rohrförmigen Endstücks (10) gebildet sind, welches mittels eines Längsschlitzes offen ausgebildet ist, wobei die Kante in den Schlitz eingesteckt ist.

8. Wärmetauscher nach einem der vorangehenden Ansprüche, **dadurch gekennzeichnet, daß** jede Querkante (12, 13) ein rohrförmiges Auslaßstück (14) aufweist.

9. Wärmetauscher nach einem der Ansprüche 1 bis 7, **dadurch gekennzeichnet, daß** ein und dieselbe Querseite (12, 13) eine transversale Ein-/Auslaßeinheit aufweist.

10. Wärmetauscher nach einem der Ansprüche 1 bis 7, **dadurch gekennzeichnet, daß** getrennte Ein-/Auslaßstücke (15, 16) vorgesehen sind.

11. Wärmetauscher nach einem der Ansprüche 1 bis 7, **dadurch gekennzeichnet, daß** die Ein-/Auslaßeinheit von einem koaxialen Endstück (17) gebildet ist.

12. Parallele Anordnung von Wärmetauschern nach einem der vorangehenden Ansprüche, **dadurch gekennzeichnet, daß** sie parallel nebeneinander angeordnet und durch Querträger (25) mit Abstand voneinander gehalten sind, und daß sie im Innern einer rohrförmigen Ummantelung (24) mit vollständig emailliertem Innenraum unter Bildung eines kompakten Wärmetauschers angeordnet sind.

13. Anordnung nach Anspruch 12, **dadurch gekennzeichnet, daß** die Querträger (25) zum Halten gestellartige Querträger (25) mit einer Mehrzahl von parallelen Aufnahmeschlitzen (27) sind, die jeweils zur Aufnahme eines Abschnittes des Körpers eines jeden Wärmetauschers dienen.

14. Anordnung nach dem vorangehenden Anspruch, **dadurch gekennzeichnet, daß** den gestellartigen Querträgern (25) die Funktion einer Schikane (30) zukommt.

15. Anordnung nach Anspruch 13 oder 14, **dadurch gekennzeichnet, daß** die Wärmetauscher asymmetrisch (33) mit voneinander verschiedenen Querkanten ausgebildet sind, welche in gegenseitig versetzter Juxtaposition einen kompakten Wärmetauscher (36) bilden.

16. Anordnung nach dem vorangehenden Anspruch, **dadurch gekennzeichnet, daß** der abgerundete Rand einer der Querkanten (12, 13) einen größeren Querschnitt als der andere aufweist.

17. Anordnung von Wärmetauschern nach einem der Ansprüche 1 bis 11, **dadurch gekennzeichnet, daß** die Wärmetauscher (45) stehend, im wesentlichen radial um eine Welle (47) eines zentralen Rührwerks (46) des Behälters eines chemischen Reaktors (44) angeordnet sind.

18. Anordnung nach dem vorangehenden Anspruch, **dadurch gekennzeichnet, daß** jeder Wärmetauscher (45) ein unteres Verlängerungsstück (54) aufweist, welches von einer Aufnahmebuchse (55) aufgenommen ist.

19. Anordnung nach dem vorangehenden Anspruch, **dadurch gekennzeichnet, daß** jede Aufnahmebuchse (55) in der Bodenwandung des Behälters vorgesehen ist.

20. Anordnung nach Anspruch 18, **dadurch gekennzeichnet, daß** jede Aufnahmebuchse (55) an einer im Bereich des Bodens des Behälters angeordneten transversalen Einfassung (57) vorgesehen ist.

## Claims

1. Metal heat exchanger of the flat type formed from two sheets of metal (2) and (3) joined to one another in a sealed manner by the edges of their longitudinal (8) and (9) and transverse (12) and (13) sides, delimiting an inner volume (5) which is free or partitioned and which opens out at the outside on at least one transverse side (12) or (13) by way of at least one coaxial or single fluid communication means, **characterised in that** the longitudinal (8) and (9) and transverse (12) and (13) sides are in a rounded form, **in that** the cross-sectional profile of the exchanger has a flat or slightly curved shape, and **in that** the outer body of the exchanger is completely enamelled.

2. Exchanger according to claim 1, **characterised in that** the sheets of metal (2) and (3) are welded to one another by spots or regions (7) before enamelling.

3. Exchanger according to claim 1, **characterised in that** the sheets of metal (2) and (3) are separated by an inner partition (23) which is parallel with the longitudinal edges of the exchanger and which divides the inner volume (5) into two juxtaposed compartments (21) and (22).

4. Exchanger according to claim 1, 2 or 3, **characterised in that** its inner volume (5) is partitioned by walls perpendicular to the faces in such a manner as to form inner compartments.

5. Exchanger according to claim 1, 2 or 3, **characterised in that** its inner volume (5) is divided by a median longitudinal partition into two independent longitudinal compartments arranged side by side.

6. Exchanger according to any one of the preceding claims, **characterised in that** the rounded peripheral sides (8,9) and (12,13) are covered with reinforcements having a rounded shape.

7. Exchanger according to the preceding claim, **characterised in that** the rounded peripheral sides (8,9) and (12,13) are formed by fitting on each of them a portion (10) of tube which is open by means of a longitudinal slot and which is fitted along the side by way of that slot.

8. Exchanger according to any one of the preceding claims, **characterised in that** each transverse side (12) and (13) has a tubular outlet portion (14).

9. Exchanger according to any one of the preceding claims 1 to 7, **characterised in that** the same transverse side (12) or (13) has a transverse inlet/outlet assembly.

10. Exchanger according to any one of the preceding claims 1 to 7, **characterised in that** the inlet/outlet portions are separate (15) and (16).

11. Exchanger according to any one of the preceding claims 1 to 7, **characterised in that** the inlet/outlet assembly is a coaxial portion (17).

12. Parallel group of exchangers according to any one of the preceding claims, **characterised in that** they are arranged parallel with one another, one next to the other, and are held in place and at a distance from one another by transverse supports (25), and **in that** they are arranged inside a tubular casing (24) having a completely enamelled inner volume to form a compact exchanger.

13. Group according to claim 12, **characterised in that** the transverse holding supports (25) are transverse supports (25) of the rack type comprising a plurality of parallel receiving slots (27), each of which acts as a housing for a portion of the body of each exchanger.

14. Group according to the preceding claim, **characterised in that** the transverse supports (25) of the rack type act as a baffle (30).

15. Group according to either of the preceding claims 13 and 14, **characterised in that** the exchangers are asymmetrical (33) with transverse sides which are different from one another, forming, in offset juxtaposition relative to one another, a compact exchanger (36).

16. Group according to the preceding claim, **characterised in that** the rounded edge of one of the transverse sides (12) and (13) is of a larger cross-section than the other.

17. Group of exchangers according to any one of claims 1 to 11, **characterised in that** the exchangers (45) are arranged upright approximately radially around the shaft (47) of the central agitator (46) of the vessel of a chemical reactor (44).

18. Group according to the preceding claim, **characterised in that** each exchanger (45) has a lower extension (54) which is accommodated in a receiving socket (55).

19. Group according to the preceding claim, **characterised in that** each receiving socket (55) is provided in the base wall of the vessel.

20. Group according to claim 18, **characterised in that** each receiving socket (55) is provided in a transverse collar (57) mounted near the base of the vessel.
